# FASCICULE DE BREVET EUROPEEN

(11) **EP 1 705 810 B1**
(45) Date de publication et mention de la délivrance du brevet: **10.07.2013**
(21) Numéro de dépôt: 06290477.6
(22) Date de dépôt: 23.03.2006
(51) Int. Cl.: H04B 7/26, H04W 16/00, H04W 16/24, H04W 80/00, H04W 84/00, H04W 84/10, B61L 3/12, B61L 27/00

(54) **Systèmes de communication pour le contrôle de convois**
Kommunikationssystem für die Steuerung eines Konvois
Communication system for controlling a convoy

(30) Priorité: 23.03.2005 FR 0502901
(43) Date de publication de la demande: 27.09.2006
(73) Titulaire: ELTA, 31700 Blagnac (FR)
(72) Inventeur: Robin-Jouan, Yves, 91430 Igny (FR)
(74) Mandataire: Novagraaf Technologies

(56) Documents cités:
- WO-A-2005/022839
- WO-A1-00/52851
- US-A- 5 420 883

## Description

La présente invention se rapporte au domaine des réseaux de communication.

La présente invention se rapporte plus particulièrement à un système de communication pour le transport.

La présente invention se rapporte à un système de communication avec et entre des mobiles, circulant le long d'une Ligne de transport guidé, convenablement équipée de points d'accès et d'infrastructure pour les relier. Plus précisément, l'invention concerne l'architecture et les fonctions originales du réseau de desserte sans fil entre les points d'accès et les mobiles et entre les mobiles eux-mêmes. Les mobiles sont des véhicules isolés, des trains classiques (voyageurs ou fret), des trains modulaires (plusieurs rames convoyées), des rames de métro. Le terme « convoi » désigne l'ensemble de ces mobiles. Dans la suite de l'exposé, le terme « train » lui est substitué par commodité, sans perte de généralité alors que le terme « mobile » est utilisé dans le sens générique des réseaux conventionnels.

Les applications de l'invention comprennent des services de communication pure, des services d'assistance et de sécurité, et des services à valeur ajoutée, le long d'une Ligne de transport guidé à l'air libre, en tranchée, dans un « canyon urbain » (entre des rangées d'immeubles) ou en tunnel :
- services de commande-contrôle de nature temps réel, notamment pour la formation et le pilotage de convois : ATC, CBTC (Automatic Train Control, Communication Based Train Control) ;
- services d'alarme ou d'urgence, en relation avec des centres opérationnels ;
- services de phonie opérationnelle entre trains et centre(s) de régulation ;
- services de gestion de flottes de voitures ou wagons ;
- services de suivi logistique par les opérateurs, ou par les clients par exemple pour le fret ;
- services de surveillance, y compris par collecte de signaux vidéo ;
- services d'infotainment (information et distraction des usagers), y compris en vidéo diffusée ou sélective, éventuellement à caractère commercial.

Dans le domaine des communications avec des mobiles, il existe de nombreuses technologies génériques ou plus ou mois spécialisées au suivi de mobiles véloces (120 km/h ou 250 km/h au sol et jusqu'aux vitesses supersoniques dans l'espace aérien).

L'état actuel de l'Art en matière de normes officielles ou de standards de fait comprend :
- des solutions de réseaux professionnels évolutives de l'analogique au tout numérique, depuis les réseaux à gestion manuelle et les 3RP (Réseaux Radio à Ressources Partagées) jusqu'aux divers standards de PMR moderne (Professional Mobile Radio, telle que TETRA, TETRAPOL, APCO 25);
- des solutions cellulaires de 2^{ème} génération, de génération transitoire et de 3^{ème} génération (2G, 2G+, 3G), issues de la radiotéléphonie institutionnelle « PTT » ou « ILEC » (notamment GSM, GPRS, UMTS) ; les solutions de 4^{ème} génération convergente avec la famille suivante, sont encore au stade de projet ;
- des solutions WLAN, multi-WLAN, et désormais WMAN (Wireless Large/Metropolitan, Area Networks), issues des réseaux informatiques pour la bureautique nomade, utilisées par les opérateurs de télécommunication alternatifs « CLEC » (Competitive Local Exchange Carriers);
- des solutions fondées sur l'utilisation de satellites géostationnaires ou défilants (SATCOM).

Le tableau ci-après présente une synthèse comparative des avantages et inconvénients de ces solutions génériques pour leur application au transport guidé.

**TABLEAU 1 : synthèse comparative des avantages et inconvénients des solutions génériques pour leur application au transport guidé.**

| **Familles de solutions** | **Applicabilité au Transport guidé** | |
|---|---|---|
| | Avantages | Inconvénients |
| V-UHF professionnelle 3RP à PMR depuis points hauts | Portée à faible débit Réutilisation canaux analogiques Ouverture de certains canaux (865-870 MHz) | Canalisation étroite (historique) Incompatibilité avec tunnels Peu de ressource disponible et menace de saturation |
| Réseaux Cellulaires 2G, 2G+, 3G | Couverture publique existante Possibilité déploiement privé (type GSM-R) | Priorités non assurées en public Coût élevé et lacunes couverture Mobile-Mobile impossible sans infra |
| WLAN dont série 802.11 | Coût compétitif en infra Mobile-Mobile autant que Mobile-Infra | Portée & mobilité faibles Généralisation du cas pire à tous Saturation et interférences |
| WMAN dont série 802.16 | Faible coût en infra Portée optimisée pour chacun Débit adaptatif | Standard pour mobiles en attente Mobile-Mobile limité (option « mesh » distribué) |
| SATCOM | Large couverture sans infra Valeur ajoutée positionnement Evolution antennes électroniques | Problème masques & tunnels Délai de latence incompressible Agilité méca des antennes (coût) |

La plupart des inconvénients cités ou inhérents aux solutions génériques rendent malaisée leur application aux services les plus critiques du transport guidé. Il est important de noter que le besoin des communications avec les trains s'exprime en termes de longue portée dans l'Axe, faible nombre de mobiles par « station de base » ou « point d'accès », et récurrence de tels points d'accès à faible capacité et faible coût. Par ailleurs la couverture doit être linéaire et non pas surfacique ou volumique ; la faible densité n'incite pas à segmenter cette couverture et à gérer la commutation entre segments (« hand-over ») alors que les conditions de propagation ne l'exigent pas forcément. Un tel besoin est fondamentalement différent de ceux auxquelles répondent les réseaux cellulaires, et il est compréhensible que les solutions cellulaires y soient mal adaptées, qu'elles proviennent du monde institutionnel, du monde professionnel, ou du monde de la bureautique nomade.

En outre, il existe des solutions propriétaires à base de guide d'onde à fentes (système IAGO de l'INRETS et ALSTOM), de coaxial à fuite (cf. MAGGALY par exemple) ou enfin de propagation libre ou confinée à faible débit (MATRA-SIEMENS), ou à haut débit (système SOFRANET). Les solutions à guide ou coaxial sont contraignantes en installation comme en exploitation, et sont désormais découragées par les opérateurs qui veulent minimiser leur coût de possession.

La solution propriétaire de MATRA-SIEMENS (cf. brevet US 5 995 845 du 30/11/99) utilise un concept cellulaire modifié par duplication des points d'accès aux extrémités de chaque cellule, ce qui fait bénéficier les trains d'une diversité entre avant et arrière, en format étalement de spectre ou OFDM. La contrepartie reste l'obligation de commuter les fréquences d'une cellule à l'autre (hand-over), comme dans tout réseau cellulaire.

SOFRANET (cf. demande de brevet français FR-A-283/760 du 26/10/2001) a été décrit comme un système de communication sur un réseau linéaire, entre des points d'accès fixes et des points d'accès mobiles sans fil. SOFRANET définit une orientation stricte du réseau, et -en tout point du réseau-des notions d'amont et d'aval par rapport au flux de données, circulant dans un seul sens. Les données émises en diffusion par un mobile sans fil M sont systématiquement reçues par au moins deux points d'accès en aval du mobile M, définissant ainsi au moins deux liaisons unidirectionnelles descendantes. De même, les données destinées au mobile sans fil M sont systématiquement transmises vers M par au moins deux points d'accès situés en amont du mobile M, définissant ainsi au moins deux liaisons unidirectionnelles montantes, dans des canaux ou créneaux temporels distincts. Le second sens d'orientation du réseau est utilisé pour assurer une redondance 1+1 du système.

SOFRANET, conçu comme un réseau à fort temps réel de bout en bout, présente des limitations par rapport à l'état de l'Art actuel des radios et des réseaux : en effet, d'une part il ne prend pas en compte la faisabilité de liaisons radio rapides bidirectionnelles en duplex avec les mobiles, ni la possibilité de multiplexer spatialement les liaisons multipoint avec les nouveaux formats radio (OFDM par exemple) ; d'autre par il se heurte à l'évolution des coeurs de réseaux depuis le monde synchrone SDH vers le monde asynchrone Ethernet sous IP, qui rendrait sa réalisation délicate sinon impossible.

*On connaît aussi dans l'art antérieur le brevet* US 5,420,883 *décrivant un dispositif de communication et des techniques de réseaux utilisées pour satisfaire des critères de sécurité de fonctionnement pour le contrôle et la localisation des trains dans les applications de transports publics rails-routes. Cette solution dérivée du système EPLRS de l'US Army dispose d'une localisation précise par corrélation temporelle destinée à l'application, et est de ce fait limitée à une forme d'onde à étalement de spectre en séquence directe (DSSS).*

L'invention sous ses différents aspects a pour objectif de pallier les inconvénients des différentes solutions répertoriées, qu'elles relèvent de normes, de standards de fait ou de solutions propriétaires.

À cet effet, la présente invention concerne, dans son acception la plus générale, un système de communication le long d'un Axe de transport guidé, rectiligne ou curviligne, entre des trains sous couverture radio d'une infrastructure de stations ou Points d'Accès (PAR) déployés le long de l'Axe, et adossés à un réseau de transit, du type synchrone ou asynchrone sous IP (Internet Protocol),
caractérisé en ce que les PAR contigus sont regroupés en grappes, sous l'autorité de contrôleurs (CPU ou *Cluster Protocol Unit),* et que le réseau de desserte entre *Points d'Accès Radio (PAR)* et trains est sans fil et utilise des liaisons unidirectionnelles ou bidirectionnelles multiplexées en partage temporel (TDMA) d'un même canal isofréquence ou de plusieurs canaux isofréquence en cas d'extension de services ou de redondance d'un service critique,
en ce que des recouvrements d'au moins une section entre PAR ou une interstation sont pratiqués entre les grappes, de manière que chaque CPU puisse percevoir et anticiper les mouvements des trains dans les sections ou interstations limitrophes, et que la synchronisation du cycle TDMA soit assurée par des moyens fixes entre CPU ou entre PAR de grappes différentes.

De préférence, le système comporte une desserte à base radio ou hyperfréquence à diversité de fréquence, en formats saut ou rampe de fréquence, étalement de spectre, multiporteuses, ou impulsions à large bande, et à diversité de liens simultanés ou séquentiels -suivant les formats- au sein du cycle TDMA.

Avantageusement, le procédé propose une diversité spatiale pour l'installation des antennes, tant au niveau des PAR, qu'au niveau des trains.

Selon un mode de mise en oeuvre particulier, ledit procédé comprend une fonction d'autolocalisation des trains opérée par la couche MAC (Medium Access Control) des CPU en coopération avec les équipements conjugués embarqués, et s'appuyant directement sur la mesure instantanée de variables de la couche physique radio.

Selon un mode de réalisation, le système met en oeuvre la réservation pour chaque train d'un motif à base d'IT (Intervalles de Temps) jointifs ou répartis dans le cycle, pour la ou les transmissions sol-train, la transmission train-sol, le relayage éventuel et la communication éventuelle entre trains, avec gestion déterministe des priorités.

Avantageusement, ledit système comporte une fonction de micro-mobilité réalisée au sein de chaque grappe en activant les IT adéquates des motifs par les stations en regard des trains considérés, avec substitutions des stations successives dans lesdites IT lorsque les trains progressent, et caractérisé en outre par un enchaînement de la micro-mobilité de grappe en grappe, exploitant le recouvrement des grappes, et l'écoute par le CPU courant de la ou des interstations limitrophes, de sorte que ladite micro-mobilité peut fonctionner seule, supporter la mobilité de la couche réseau (mobile IP), ou coopérer avec elle.

De préférence, le système comprend une fonction d'allocation de motifs fixe (VF) ou dynamique (VD) de grappe en grappe, et au sein des grappes, qui réalise une réutilisation de motifs ordonnée géographiquement par chaque CPU, afin que la distance de réutilisation soit de l'ordre de la longueur de l'emprise, avec une résolution définie par un partage spatial de l'emprise en une zone centrale et deux marges latérales (en deçà des frontières), lesdites marges étant de longueur supérieure à celles des recouvrements de grappes de la revendication 1.

Selon une variante, le système met en oeuvre une allocation ou réallocation dynamique déclenchée par une séquence de doublets, émise par les stations dans des intervalles IT qui leur sont réservés individuellement dans le cycle TDMA, chaque doublet contenant le numéro de motif courant et le nouveau numéro de motif sur lequel le train doit basculer, avec maintien du doublet de cycle en cycle jusqu'à son exécution par l'équipement du train.

De préférence, le système comprend la tenue d'un synopsis de la situation des trains par le CPU dans son emprise, et la diffusion de ce synopsis dans les IT réservés aux stations de son emprise, ou dans des IT supplémentaires qui leur sont accolées, le dit synopsis étant propagé au CPU voisin, soit au moyen d'une extension de la liaison de synchro entre grappes, soit directement par la radio, soit encore par l'intermédiaire des trains circulant entre les grappes, qui le recopient au fil de l'eau.

Selon un mode de réalisation préféré, le système met en oeuvre un échange des synopsis entre CPU utilisant le réseau de transit et des protocoles de servitude de la suite IP, ou des protocoles particuliers de communications entre routeurs, ce qui constitue une alternative (A) par rapport à l'utilisation du réseau de distribution entre CPU.

Avantageusement, le système de communication met en oeuvre une allocation dynamique coopérative entre CPU, qui se base sur les synopsis échangés et organise la réutilisation géographique train par train en ménageant à chaque train une fenêtre spatiale de garde en avant et en arrière de son interstation courante, et qui déclenche une réallocation d'un train sur deux, dès que leurs fenêtres se rencontrent, méthode qui constitue une alternative (B).

Selon une variante, le système comporte une capacité intrinsèque de relayage et de communication directe train à train, en exploitant à la volée (par des trains relais ou initiateurs de communication) les IT propres à chaque motif de train ciblé, identifié comme étant dans le voisinage immédiat via le synopsis de situation, ladite capacité étant complète en allocation fixe VF, ou soumise à l'allocation dynamique VD pratiquée par chaque CPU sur son emprise, considérée comme prépondérante.

On comprendra mieux l'invention à l'aide de la description, faite ci-après à titre purement explicatif, d'un mode de réalisation de l'invention, en référence aux figures annexées :

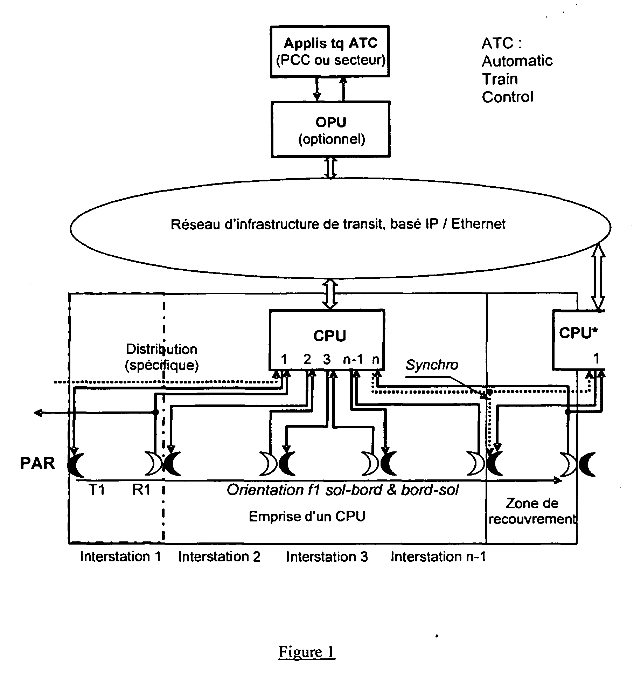

- la figure 1 illustre l'architecture MIMADIP (MIcroMobilité & Accès Dynamique sous Internet Protocol) selon la présente invention, avec emprises de CPU à recouvrement dans le cas unidirectionnel (antennes : noir en émission, blanc en réception) ;

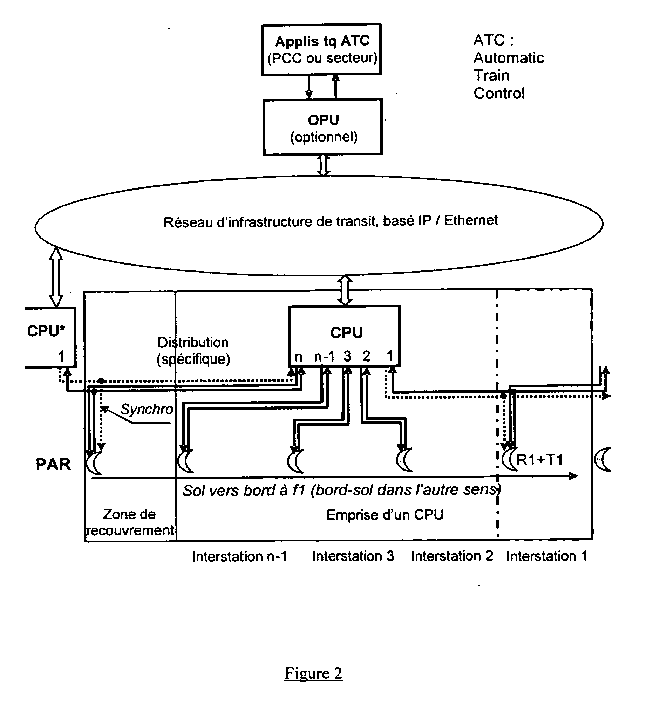

- la figure 2 illustre l'architecture MIMADIP selon l'invention, avec emprises de CPU à recouvrement, dans le cas bidirectionnel (antennes : gris en émission/réception) ;

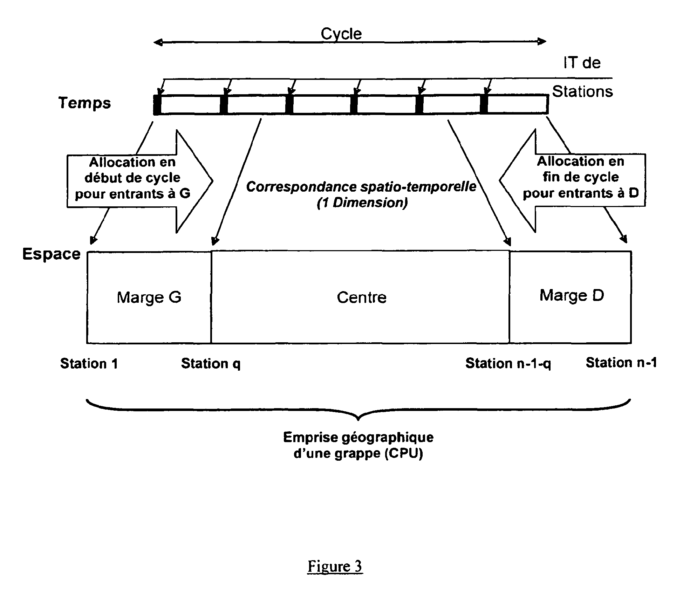

- la figure 3 illustre les règles nominales d'allocation des motifs d'IT au sein d'une grappe pour une bonne réutilisation géographique globale ; et

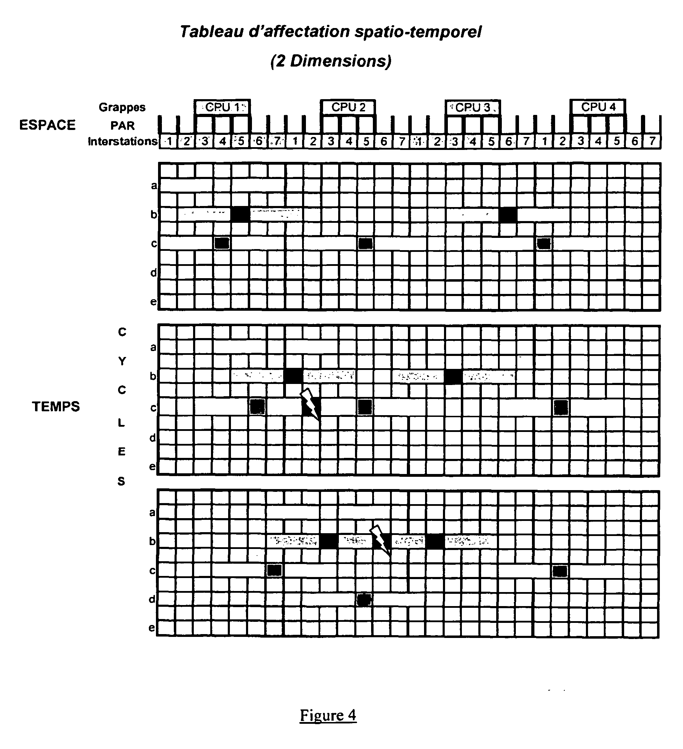

- la figure 4 représente les règles alternatives d'allocation des motifs d'IT entre grappes pour une bonne réutilisation géographique globale, le temps s'écoulant de haut en bas.

Selon l'invention, MIMADIP (MIcroMobilité & Accès Dynamique sous Internet Protocol) est un système de communication original pour trains le long d'une Ligne ou « Axe » de circulation guidée, en partage de temps (TDMA) entre les trains et des bornes fixes disposées régulièrement ou non le long de la Ligne. La Ligne peut être rectiligne, curviligne, voire refermée en boucle. MIMADIP prévoit la mise en commun pour toutes les bornes d'un cycle TDMA synchrone dans un canal isofréquence à une fréquence f1, suivant l'Axe de circulation, et généralise ce principe au cas de liaisons mobiles unidirectionnelles ou bidirectionnelles. Un tel TDMA global donne la meilleure garantie de connectivité et de maîtrise des interférences. Plusieurs canaux du même type à des fréquences f2, ..., fN sont utilisables pour diversifier et étendre les services, pour ramifier le déploiement (ligne fourchue, lignes à portion commune ou adjacente, zones de garage, ...) ou pour assurer une ou des redondances chaudes 1+1 de certains services critiques. Les liaisons mobiles associées peuvent être co- ou contra-directionnelles. Dans la suite de l'exposé; la description sera limitée à un seul canal isofréquence, sans restriction de généralité.

À une ou plusieurs fréquences, ce système s'affranchit des contraintes du cellulaire, notamment de la gestion des fréquences cellule par cellule et du hand-over. Les stations jointives sont regroupées en « grappe », sous l'autorité d'un contrôleur de grappe ou CPU (Cluster Protocol Unit). Les grappes se succèdent au sein d'éventuels secteurs, au sens d'une partition de la couverture globale. Le cycle TDMA est divisé en Intervalles de Temps (IT), et distingue des intervalles de temps de stations et des intervalles de temps de trains, organisés au sein du cycle. Un « motif de train » (pattern) rassemble les intervalles IT concernés pour un même train. Ce motif est une entité logique, mais correspond à des IT soit îlotés, soit répartis dans le cycle (par exemple pour laisser à une application critique le temps de réagir entre émission et réception), avec des possibles imbrications entre motifs. Des IT du motif sont réservés pour le relayage et pour la communication directe train à train ; les autres sont destinées aux communications sol-train et train-sol.

Les innovations propres au système selon l'invention dit MIMADIP consistent en un ensemble de caractéristiques remarquables énoncées ci-après :
- le réseau d'infrastructure considéré pour le transit entre des « bornes » fixes et les noeuds de raccordement des serveurs (Poste de Commande-Contrôle, Applications ATC de secteurs, par exemple) est un réseau géré sous IP (Internet Protocol) et sa suite, entre des noeuds constitués de commutateurs ou de routeurs IP, et des artères synchrones (SDH : Synchronous Data Hierarchy) ou asynchrones, c'est-à-dire utilisant des artères Ethernet (10, 100 , 1G ou 10 G basés paires de cuivre ou fibres optiques). Les éléments de MIMADIP (noeuds de stations, noeuds de trains, radios) sont médiatisés selon les standards MIB (Management Information Base) et SNMP (Simple Network Management Protocol) véhiculés par la pile UDP/IP (Uniform Data Protocol), et gérables sur la même plateforme ouverte que celle de l'administration du réseau d'infrastructure.
- Le protocole IP est considéré en version v4, en v6 et ses versions ultérieures, avec les perfectionnements attendus de la mobilité hiérarchique et du routage ad hoc. MIMADIP accepte ainsi les standards les plus porteurs pour le réseau de transit, sans réinjecter de contrainte propre.
- La synchronisation des stations et des trains au sein des cycles TDMA ne fait pas appel au réseau d'infrastructure, mais à des moyens et liaisons propres, relevant du réseau de distribution MIMADIP, c'est-à-dire de liens fixes déployés entre les stations de grappes et les stations courantes, et entre les stations et leurs bornes ou Point d'Accès Radio (PAR dans le texte à suivre), chacun -local ou déporté- étant équipé d'un émetteur et d'un récepteur. De ce point de vue, le système s'affranchit nativement de la latence du réseau de transit et de ses variations. Le réseau de distribution MIMADIP est de préférence réalisé à base de fibres optiques.
- Pour lutter contre la dispersion de propagation, à la basique diversité d'antennes (côté PAR et côté mobile) MIMADIP ajoute une diversité de fréquence utilisant toutes les facilités des formats modernes et une diversité de liens entre un mobile et l'infrastructure, multiplexés dans le temps ou strictement simultanés (suivant le format). Les formats à diversité de fréquence actuellement considérés sont le saut ou la rampe de fréquence, l'étalement par séquence directe, la transmission multi-porteuses (OFDM ou COFDM : Coded Orthogonal Frequency Division Multiplex), ou les formes d'onde à très large bande (UWB : Ultra Wide Band).
- Pour supporter la couche MAC (Medium Access Control), le système dispose d'une fonction d'autolocalisation qui exploite directement des mesures instantanées et des seuils sur des variables de la couche physique, notamment la détection des passages des trains sous les rampes d'antennes fixes et procède à des échanges rapides de signalisation interne entre trains et stations. Chaque CPU tient à jour la liste des trains et leur positionnement schématique dans les interstations de son emprise (synopsis de situation). C'est à partir de ces informations qu'il aiguille convenablement les messages montants, sous forme de trames numérotées et déposées dans les IT convenables du motif d'un train, vers les PAR d'émission en regard dudit train. Une substitution des stations successives dans lesdites IT est assurée par le CPU au rythme de progression du train dans son emprise. Ce mécanisme est purement déterministe et de ce fait gère efficacement les priorités entre services.
- Les fonctions de micro-mobilité de la couche MAC de MIMADIP sont complètes et peuvent s'enchaîner d'une grappe à la suivante afin assumer une couverture totale de la Ligne, en toute autonomie par rapport à d'autres couches superposées ou supérieures de mobilité, tant au niveau IP qu'au niveau applicatif. L'enchaînement est assuré en pratiquant un recouvrement d'interstation(s) entre 2 grappes contiguës (cf. planches 1 et 2). En cas de PAR déportés, la section entre PAR se substitue à l'interstation et cette remarque vaut également pour le reste de l'exposé. Suivant l'orientation du canal (gauche à droite systématique sur la planche 1 et à l'émission sol sur la planche 2, suivant les flèches sous les antennes) qui détermine la numérotation des PAR, le premier récepteur R1 de la grappe est relié à la dite grappe mais aussi dérivé vers la grappe immédiatement précédente ; la liaison n vers le dernier émetteur potentiel de la dite grappe est mise en réserve, mais le CPU surveille la dernière interstation n limitrophe de son emprise grâce à une dérivation pratiquée à partir du récepteur R1 de la grappe immédiatement suivante. Pour une capacité de n par grappe, l'emprise s'étendra donc sur n-1 interstations et 1 interstation (de surveillance, mais non d'émission) imbriquée avec la grappe suivante. Classiquement (mais sans exclusive) n = 4 à 8 ; l'emprise d'une grappe peut alors s'étendre sur 3 à 7 interstations (ou sections de Ligne entre PAR). Dans d'autres déploiements, on considère notamment n = 12, avec un recouvrement de 2, soit une emprise de 10 interstations (ou sections de Ligne entre PAR).
- La synchronisation est assurée à l'intérieur de la grappe par le CPU, et d'une grappe à la suivante (dans le sens de l'orientation déjà mentionnée) en mobilisant la liaison n réservée dans le paragraphe précédent. Cette liaison (en pointillé dans les planches 1 et 2) peut piloter directement le premier émetteur du CPU suivant (CPU* des planches 1 et 2), ou être dirigée vers ce CPU suivant. D'autres alternatives sont possibles, à partir d'une cascade de liens spécifiques de PAR à PAR, le long des voies (utilisation d'une fibre dédiée, par exemple).
- C'est le recouvrement d'une ou plusieurs interstations qui permet à une grappe d'anticiper la perception des entrées et sorties de trains dans son emprise, notamment dans le cas défavorable où les trains circulent dans le sens opposé à l'ouverture des récepteurs fixes (c'est-à-dire contraire à la flèche sol-bord de la planche 1 et selon celle de la planche 2). Le recouvrement consomme de la capacité de l'infrastructure, et il faut donc ajuster le compromis mobilité/capacité. La représentation des planches 1 et 2 adopte un recouvrement d'une seule interstation, pour n-1 interstations utiles par CPU, ce qui n'est qu'une illustration non restrictive de l'invention.
- Le TDMA peut-être fixe pour l'ensemble des stations et des trains actifs d'une Ligne (version de MIMADIP dite VF), ou peut être géré en Allocation Dynamique, avec réutilisation géographique des IT et motifs à l'échelle des grappes, c'est-à-dire de grappe en grappe (version de MIMADIP dite VD). Pour chaque grappe de stations, l'allocation est indexée sur l'autolocalisation. En VF, les motifs de trains sont quelconques, mais figés, seules les stations se succèdent au sein des IT qui leur sont réservées dans les motifs. En VD, les motifs de trains sont îlotés (IT groupées dans le cycle) et l'allocation de motifs aux trains est pratiquée en respectant des règles élémentaires de réutilisation géographique, d'une grappe à l'autre, à une distance moyenne proche de la longueur de leur emprise. Une méthode simple pour ce faire consiste à prendre pour objectif une correspondance spatio-temporelle entre le cycle et l'emprise d'une grappe (cf. planche 3), par exemple en associant le début du cycle à la marge gauche de l'emprise, le milieu du cycle au centre de l'emprise et la fin du cycle à la marge droite de l'emprise. À tout train entrant à gauche, le CPU alloue un motif en début de cycle ; à tout train entrant à droite, le CPU alloue un motif en fin de cycle. Des substitutions peuvent être opérées par le CPU dans les marges opposées et au centre de l'emprise. Avec cette méthode, l'allocation dynamique est compartimentée grappe par grappe, sans optimiser la politique globale pour la Ligne.
- Plus précisément, pour une faible densité de trains en circulation, quasi homogène entre les CPU, les allocations ne sont pas modifiées à la traversée d'une emprise de grappe et tout se passe comme en VF. À partir de certains seuils sur les motifs admis en marge gauche et en marge droite (correspondant par exemple à 1/3 de la capacité du cycle de chaque côté), le mode VD s'active et le CPU vérifie -voire corrige- l'allocation à l'entrée de tout nouveau train dans une des marges et fait de la réallocation à l'arrivée de ce train dans la marge opposée. Avec une densité croissante de trains, une réallocation intermédiaire est possible au centre de l'emprise (correspondant par exemple au 1/3 du milieu du cycle). En cas de saturation locale, quelques débordements internes peuvent être acceptés au-delà des 1/3 de cycle de l'exemple cité, à condition de les libérer préférentiellement, dès que le déplacement relatif des trains dans l'emprise le rend possible. En sortie d'emprise, le train libère le motif et reprend par défaut celui qu'il avait lors de son entrée. En principe, la longueur des marges, qui relèvent de l'Allocation Dynamique, doit être supérieure à celle des recouvrements, qui relèvent de la micro-mobilité : par exemple 2 à 3 interstations pour une grappe de 7 stations à recouvrement de 1 interstation.
- Les allocations ou les réallocations des trains sont déclenchées par le CPU via les IT de stations concernées, par exemple en diffusant une séquence de doublets, chaque doublet contenant le numéro de motif courant et le nouveau numéro de motif sur lequel le train doit basculer. Le CPU maintient un doublet de cycle en cycle jusqu'à son exécution.
- Selon un perfectionnement de l'invention, notamment destiné à faciliter le relayage et les communications train à train, le CPU diffuse le synopsis de la situation dans les IT réservés aux stations de son emprise, ou dans des IT supplémentaires qui leur sont accolées pour former un « motif de station », et l'équipement de chaque train (TPU : Train Protocol Unit) recopie le synopsis tel qu'il le reçoit, au fil de l'eau. Le synopsis d'un CPU est propagé au CPU voisin, soit directement par la radio, soit par l'intermédiaire d'une extension de la liaison de synchro entre grappes (en pointillé dans les planches 1 et 2) sous forme bidirectionnelle, soit encore par l'intermédiaire des trains circulant entre les grappes.
- En alternative (A) à ces mécanismes de bas niveau, la tenue du synopsis peut exploiter des échanges de servitude sous IP entre CPU via le réseau de transit, en réutilisant des protocoles standards inter-routeurs de la suite IP (par exemple ICMP : Internet Control Message Protocol), une adaptation du protocole SNMP, ou un protocole spécifique directement au-dessus de IP, en multipoint, comme le fait OSPF (Open Shortest Path First).
- En alternative (B) au mécanisme précédemment décrit de correspondance spatio-temporelle au sein d'une grappe, la disponibilité d'un synopsis étendu aux grappes voisines permet au CPU de pratiquer des allocations ou réallocations dynamiques différentiées, train par train, en imposant la réservation d'une fenêtre spatiale de garde, encadrant le train, où la réutilisation du motif est interdite (y compris si la fenêtre déborde sur les grappes voisines). La longueur de la fenêtre peut être celle d'une emprise de grappe, ou bien ajustée localement par le CPU courant. Il ne s'agit plus de gérer une correspondance spatio-temporelle à 1 dimension, mais un tableau croisant 1 dimension d'espace et 1 dimension de temps (cf. planche 4, où les différences d'épaisseurs de traits sont liées simplement à l'édition). Ce mécanisme, qui n'est plus compartimenté dans une grappe, est plus souple et performant que le précédent, mais il suppose une véritable coopération entre CPU, avec des échanges significatifs. En outre, les réallocations ne sont plus systématiques, mais elles peuvent subir des effets de cascade, voire d'avalanche, lorsque les trains s'accumulent dans une grappe.
- Pour expliciter le détail de l'alternative B, sur la planche 4, les cycles se succèdent verticalement et l'occupation des motifs (a, b, c, d, e) par les trains est symbolisée par des carrés plus foncés. Les motifs de stations sont volontairement omis. Certains cycles intermédiaires ont été sautés, pour une meilleure animation de la planche. Chaque colonne représente une interstation (ou une section entre PAR). Les fenêtres spatiales, choisies sur la planche 4 égales à une emprise de grappe - soit sept cases -, sont représentées horizontalement en gris pâles. Le cas du train en a correspond à une allocation simple le long de la Ligne et ne pose aucun problème de circulation de grappe en grappe. Les cas des trains en b et en c illustrent ce qui se passe lors du mouvement des trains en cas d'allocations multiples du même motif dans des grappes différentes. Les fenêtres s'intersecteraient au 2^{ème} cycle avec les trains en c, au 3^{ème} cycle avec les trains en b. Les CPU se concertent pour réallouer au 3^{ème} cycle un nouveau motif (en d) à l'un des trains antérieurement en c, par exemple à celui se déplace le moins vite ou qui a cumulé le moins de changements de motif. Cette description et le quantitatif de la planche 4 ne sont pas restrictifs du déploiement possible selon l'invention.
- Si le protocole IP utilisé sur le réseau de transit dispose de la mobilité HMIP v6 (Hierarchical Mobility Internet Protocol, selon l'acception de l'IETF) ou une mobilité de type plus avancé, les messages seront acheminés automatiquement depuis et vers les applications, en relative transparence, éventuellement avec quelques aléas au voisinage des frontières de grappe. Dans le cas contraire, ou pour s'affranchir des aléas, MIMADIP pratique de l'encapsulation / décapsulation d'en-tête IP, donc du double en-tête (« tunneling ») sur le transit, entre le routeur de connexion au(x) serveur(s) et les routeurs de grappes de stations. Dans le sens montant vers les trains, une adresse externe générale de diffusion peut suffire ; l'ensemble routeur-CPU décapsule les en-têtes, le CPU lit les adresses capsulées et s'il est concerné réalise l'aiguillage convenable vers les PAR. Dans le sens descendant depuis les trains, les CPU sont transparents, ou (en option) encapsulent les en-têtes des trains avec leur propre adresse comme adresse-source. La ou les applications ATC peuvent lire cette adresse et donc savoir localiser le train par le réseau, si tel est leur besoin. Un OPU (Operation center Protocol Unit) associé à une application centrale peut alternativement gérer l'adressage IP montant en fonction des adresses-source de la décapsulation descendante. On peut ainsi s'affranchir de toute fonctionnalité de mobilité au niveau IP, si c'est nécessaire. De plus dans ce cas, rien ne s'oppose à avoir un sous-réseau et de multiples adresses IP à bord du train.
- En alternative (A), le recours à des échanges de servitude entre CPU via des protocoles du monde IP, prépare l'arrivée sur le marché Internet de fonctions de mobilité verticale au sens des réseaux de radiocommunications cellulaires. Cette mobilité verticale généralisera de tels échanges de servitude entre les couches de transmission et de commutation, avec des interfaces à finaliser à partir de l'ébauche proposée.

En complément des services décrits dans les paragraphes précédents, le système MIMADIP intègre une capacité intrinsèque de relayage train à train, par exploitation à la volée -par des trains relais- des IT propres à chaque motif de train ciblé, identifié comme étant dans le voisinage immédiat via le synopsis de situation. Cette capacité est complète en cas d'allocation fixe pour une Ligne (en VF). Elle est soumise et impactée par l'allocation dynamique d'IT et de motif pratiquée par chaque CPU sur son emprise (en VD), considérée comme prépondérante. Elle suppose les liens adéquats dans le train pour un déport en temps réel entre les extrémités, y compris à travers les attelages, si besoin est. En outre, au-delà d'un simple relayage, le concept MIMADIP est ouvert au principe de communication directe train à train dans une même interstation, par exemple dans l'hypothèse d'une évolution de la signalisation vers une solution de type « cantons glissants » (European Rail Traffic Management System, plus précisément ERTMS 2 et suivants).

L'invention est décrite dans ce qui précède à titre d'exemple. Il est entendu que l'homme du métier est à même de réaliser différentes variantes de l'invention sans pour autant sortir du cadre du brevet tel que défini par les revendications annexées.

## Revendications

1. Système de communication le long d'un axe de transport guidé, rectiligne ou curviligne, entre des trains comprenant :
- une infrastructure de stations ou Points d'Accès, PAR, contigus regroupés en grappes, sous l'autorité de contrôleurs, CPU, lesdits PAR étant déployés le long de l'axe,
- un réseau de dessertes sans fil entre les PAR,
- un train utilisant des liaisons bidirectionnelles multiplexées en partage temporels, TDMA, d'un même canal isofréquence ou de plusieurs canaux isofréquence en cas d'extension de services ou de redondance d'un service critique, et
- des recouvrements d'au moins une section entre PAR ou une interstation sont pratiqués entre les grappes, de sorte que chaque CPU perçoit et anticipe les mouvements des trains dans des sections ou interstations limitrophes,
**caractérisé en ce que** :
- lesdits CPU sont interconnectés par un réseau de transit sous IP, Internet Protocol, et que des liaisons fixes entre CPU de chaque grappe contiguë ou entre PAR de grappe différente assurent une synchronisation du cycle TDMA.

2. Système de communication selon la revendication 1, **caractérisé par** une desserte à base radio ou hyperfréquence à diversité de fréquence, en formats saut ou rampe de fréquence, étalement de spectre, multiporteuses, ou impulsions à large bande, et à diversité de liens simultanés ou séquentiels -suivant les formats-pour chaque train au sein du cycle TDMA.

3. Système de communication selon les revendications 1 et 2, **caractérisé par** une diversité spatiale pour l'installation des antennes, tant au niveau des PAR, qu'au niveau des trains.

4. Système de communication selon les revendications 1 et 2, **caractérisé par** une fonction d'autolocalisation des trains opérée par la couche MAC, Medium Access Control, des CPU en coopération avec les équipements conjugués embarqués, et s'appuyant directement sur la mesure instantanée de variables de la couche physique radio.

5. Système de communication suivant les revendications 1, 2 et 4, **caractérisé par** la réservation pour chaque train d'un motif à base d'IT, Intervalles de Temps, jointifs ou répartis dans le cycle, pour la ou les transmissions sol-train, la transmission train-sol, le relayage éventuel et la communication éventuelle entre trains, avec gestion déterministe des priorités.

6. Système de communication selon les revendications 1, 2, 4 et 5, **caractérisé par** une fonction de micro-mobilité réalisée au sein de chaque grappe en activant les IT adéquates des motifs par les stations en regard des trains considérés, avec substitutions des stations successives dans lesdites IT lorsque les trains progressent, et **caractérisé en outre par** un enchaînement de la micro-mobilité de grappe en grappe, exploitant le recouvrement des grappes, et l'écoute par le CPU courant de la ou des interstations limitrophes, de sorte que ladite micro-mobilité peut fonctionner seule, supporter la mobilité de la couche réseau, mobile IP, ou coopérer avec elle.

7. Système de communication selon les revendications 1, 2, 4 à 6, **caractérisé par** une fonction d'allocation de motifs fixe, VF, ou dynamique, VD, de grappe en grappe, et au sein des grappes, qui réalise une réutilisation de motifs ordonnée géographiquement par chaque CPU, afin que la distance de réutilisation soit de l'ordre de la longueur de l'emprise, avec une résolution définie par un partage spatial de l'emprise en une zone centrale et deux marges latérales, en deçà des frontières, lesdites marges étant de longueur supérieure ou égale à celles des recouvrements de grappes de la revendication 1.

8. Système de communication selon les revendications 1, 2, 4 à 7, **caractérisé par** une allocation ou réallocation dynamique déclenchée par une séquence de doublets, émise par les stations dans des intervalles IT qui leur sont réservés individuellement dans le cycle TDMA, chaque doublet contenant le numéro de motif courant et le nouveau numéro de motif sur lequel le train doit basculer, avec maintien du doublet de cycle en cycle jusqu'à son exécution par l'équipement du train.

9. Système de communication selon les revendications 1, 2, 4 à 7, **caractérisé par** la tenue d'un synopsis de la situation des trains par le CPU dans son emprise, et la diffusion de ce synopsis dans les IT réservés aux stations de son emprise, ou dans des IT supplémentaires qui leur sont accolées, le dit synopsis étant propagé au CPU voisin, soit au moyen d'une extension de la liaison de synchro entre grappes, soit directement par la radio, soit encore par l'intermédiaire des trains circulant entre les grappes, qui le recopient au fil de l'eau.

10. Système de communication selon les revendications 1, 2, 4 à 9, **caractérisé par** un échange des synopsis entre CPU utilisant le réseau de transit et des protocoles de servitude de la suite IP, ou des protocoles particuliers de communications entre routeurs, ce qui constitue une alternative A par rapport à l'utilisation du réseau de distribution entre CPU.

11. Système de communication selon les revendications 1, 2, 4 à 6, 8 et 9, **caractérisé par** une allocation dynamique coopérative entre CPU, qui se base sur les synopsis échangés et organise la réutilisation géographique train par train en ménageant à chaque train une fenêtre spatiale de garde en avant et en arrière de son interstation courante, et qui déclenche une réallocation d'un train sur deux, dès que leurs fenêtres se rencontrent, méthode qui constitue une alternative B à la revendication 7.

12. Système de communication selon les revendications 1, 2, 4 à 9, **caractérisé par** une capacité intrinsèque de relayage et de communication directe train à train, en exploitant à la volée, par des trains relais ou initiateurs de communication, les IT propres à chaque motif de train ciblé, identifié comme étant dans le voisinage immédiat via le synopsis de situation, la dite capacité étant complète en allocation fixe VF, du soumise à l'allocation dynamique VD pratiquée par chaque CPU sur son emprise, considérée comme prépondérante.

## Patentansprüche

1. Kommunikationssystem entlang einer geführten, geraden oder kurvigen Transportachse zwischen Zügen, umfassend:
- eine Infrastruktur von Stationen oder Zugriffspunkten PAR, die aneinander grenzen und zu Gruppen zusammengefasst sind, unter der Autorität von Controllern CPU, wobei die PAR entlang der Achse angeordnet sind,
- ein Netz von drahtlosen Bedieneinheiten zwischen den PAR,
- einen Zug, der die bidirektionalen gemultiplexten Timesharing-Verbindungen TDMA eines selben Isofrequenzkanals oder mehrerer Isofrequenzkanäle im Falle einer Diensterweiterung oder einer Redundanz eines kritischen Dienstes verwendet, und
- Überlappungen um mindestens einen Bereich zwischen PAR oder einer Interstation erfolgen zwischen den Gruppen, so dass jeder CPU die Bewegungen der Züge in Grenzbereichen oder Grenzinterstationen wahrnimmt und antizipiert,
**dadurch gekennzeichnet, dass**:
- die CPU durch ein Transitnetz unter IP, Internet Protocol, miteinander verbunden sind und dass die festen Verbindungen zwischen CPU jeder angrenzenden Gruppe oder zwischen PAR einer anderen Gruppe eine Synchronisierung des TDMA-Zyklus gewährleisten.

2. Kommunikationssystem nach Anspruch 1, **gekennzeichnet durch** eine Bedieneinheit auf Funkbasis oder auf Hyperfrequenzbasis mit Frequenzdiversität in Sprungformaten oder mit Frequenzrampe, Spektrendehnung, Mehrfachträger oder Breitbandimpulsen und mit Diversität von gleichzeitigen oder sequentiellen Verbindungen - je nach Format - für jeden Zug innerhalb des TDMA-Zyklus.

3. Kommunikationssystem nach den Ansprüchen 1 und 2, **gekennzeichnet durch** eine Raumdiversität für die Installation der Antennen sowohl im Bereich der PAR als auch im Bereich der Züge.

4. Kommunikationssystem nach den Ansprüchen 1 und 2, **gekennzeichnet durch** eine Autolokalisationsfunktion der Züge, die von der Schicht MAC, Medium Access Control, der CPU in Kooperation mit den entsprechenden eingebauten Ausrüstungen ausgeführt wird und sich direkt auf die momentane Messung von Variablen der physischen Funkschicht stützt.

5. Kommunikationssystem nach den Ansprüchen 1, 2 und 4, **gekennzeichnet durch** die Reservierung eines Motivs auf Basis von IT, Zeitintervallen, die aneinander grenzen oder im Zyklus verteilt sind, für jeden Zug für die Übertragung(en) Boden-Zug, die Übertragung Zug-Boden, die mögliche Relaisübertragung und die mögliche Kommunikation zwischen Zügen mit deterministischer Steuerung der Prioritäten.

6. Kommunikationssystem nach den Ansprüchen 1, 2, 4 und 5, **gekennzeichnet durch** eine Funktion der Mikromobilität, die innerhalb jeder Gruppe verwirklicht ist, wobei die entsprechenden IT der Motive **durch** die Stationen im Hinblick auf die betreffenden Züge aktiviert werden, mit Substitution der aufeinanderfolgenden Stationen in den IT, wenn die Züge weiterfahren, und ferner **gekennzeichnet durch** eine Verkettung der Mikromobilität von Gruppe zu Gruppe, wobei die Überlappung der Gruppen und die Anhörung der Grenzinterstation(en) **durch** den laufenden CPU eingesetzt werden, so dass die Mikromobilität alleine funktionieren, die Mobilität der Netzschicht, mobile IP, unterstützen oder mit dieser kooperieren kann.

7. Kommunikationssystem nach den Ansprüchen 1, 2, 4 bis 6, **gekennzeichnet durch** eine Funktion der Zuweisung von festen Motiven, VF, oder dynamischen Motiven, VD, von Gruppe zu Gruppe und innerhalb der Gruppen, die eine Wiederverwendung von Motiven durchführt, die von jedem CPU geographisch geordnet ist, damit der Abstand der Wiederverwendung ungefähr die Länge des Geländes darstellt, mit einer definierten Resolution **durch** eine Raumteilung des Geländes in eine zentrale Zone und zwei seitliche Randbereiche über die Grenzen hinweg, wobei die Randbereiche eine größere oder gleiche Länge wie jene der Überlappungen von Gruppen aus Anspruch 1 aufweisen.

8. Kommunikationssystem nach den Ansprüchen 1, 2, 4 bis 7, **gekennzeichnet durch** eine dynamische Zuweisung oder Neuzuweisung, die **durch** eine Sequenz von Doublets ausgelöst wird, die von den Stationen in Intervallen IT entsandt wird, die für sie individuell im TDMA-Zyklus reserviert sind, wobei jedes Doublet die Nummer des laufenden Motivs und die neue Nummer des Motivs enthält, auf die der Zug schwenken soll, unter Beibehaltung des Doublets von Zyklus zu Zyklus bis zu seiner Ausführung **durch** die Ausrüstung des Zuges.

9. Kommunikationssystem nach den Ansprüchen 1, 2, 4 bis 7, **gekennzeichnet durch** das Halten einer Synopsis der Situation der Züge **durch** den CPU in seinem Gelände und die Verbreitung dieser Synopsis in den IT, die für die Stationen seines Geländes reserviert sind, oder in den zusätzlichen IT, die ihnen zugeteilt wurden, wobei die Synopsis an den benachbarten CPU entweder mit Hilfe einer Erweiterung der Synchro-Verbindung zwischen den Gruppen oder direkt **durch** den Funk oder auch mit Hilfe der Züge, die zwischen den Gruppen zirkulieren, die sie laufend kopieren, mitgeteilt wird.

10. Kommunikationssystem nach den Ansprüchen 1, 2, 4 bis 9, **gekennzeichnet durch** einen Synopsis-Austausch zwischen den CPU unter Verwendung des Transitnetzes und von Routineprotokollen der IP-Folge oder von besonderen Kommunikationsprotokollen zwischen den Routern, was eine Alternative A zur Verwendung des Verteilungsnetzes zwischen den CPU darstellt.

11. Kommunikationssystem nach den Ansprüchen 1, 2, 4 bis 6, 8 und 9, **gekennzeichnet durch** eine kooperative dynamische Zuweisung zwischen den CPU, die auf der jeweiligen ausgetauschten Synopsis basiert und die geographische Wiederverwendung pro Zug organisiert, wobei jedem Zug ein Sicherheitsraumfenster vor und hinter seiner laufenden Interstation freigehalten wird, und die eine Neuzuweisung eines Zuges von zwei auslöst, sobald ihre Fenster aufeinandertreffen, wobei diese Methode eine Alternative B zu Anspruch 7 darstellt.

12. Kommunikationssystem nach den Ansprüchen 1, 2, 4 bis 9, **gekennzeichnet durch** eine innere Kapazität der Relaisübertragung und direkten Kommunikation von Zug zu Zug, wobei **durch** Relais- oder Kommunikationsinitiatorzüge die IT eingesetzt werden, die jedem anvisierten Zugmotiv eigen sind, das als in unmittelbarer Umgebung befindlich über die Situationssynopsis identifiziert wurde, wobei die Kapazität in einer festen Zuweisung VF vollständig ist oder der dynamischen Zuweisung VD unterliegt, die von jedem CPU auf seinem Gelände, das als vorherrschend betrachtet wird, vorgenommen wird.

## Claims

1. System of communication along a rectilinear or curvilinear guided-transport line between trains comprising:
- an infrastructure of stations or Access Points, PAR, that are contiguous, grouped into clusters, under the authority of controllers, CPU, the said PAR being deployed along the line,
- a network of wireless service elements between the PARs,
- a train using two-way time division multiplex links, TDMA, of one and the same isofrequency channel or of several isofrequency channels in the case of extension of services or of redundancy of a critical service, and
- overlaps of at least one section between PAR or an interstation are made between the clusters, so that each CPU perceives and anticipates the movements of the trains in adjacent sections or interstations,
**characterized in that**:
- the said CPU are interconnected by a transit network under an IP, Internet Protocol, and that fixed links between CPU of each contiguous cluster or between PAR of different clusters ensure a synchronization of the TDMA cycle.

2. Communication system according to Claim 1, **characterized by** a radio-based or microwave-based service element with frequency diversity, in a frequency skip or ramp, spread spectrum, multicarrier or broadband pulse formats and with diversity of simultaneous or sequential links - depending on the formats - for each train within the TDMA cycle.

3. Communication system according to Claims 1 and 2, **characterized by** a spatial diversity for the installation of the antennas, both at the PARs and at the trains.

4. Communication system according to Claims 1 and 2, **characterized by** an autolocalization function of the trains carried out by the MAC layer, Medium Access Control, of the CPU in cooperation with the on-board combined equipments, and being based directly on the instantaneous measurement of variables of the radio physical layer.

5. Communication system according to Claims 1, 2 and 4, **characterized by** the reservation for each train of a pattern based on TS, Time Slots, that are adjacent or distributed in the cycle, for one or more the ground-train transmissions, the train-ground transmission, the optional relaying and the optional communication between trains, with deterministic management of the priorities.

6. Communication system according to Claims 1, 2, 4 and 5, **characterized by** a micromobility function carried out within each cluster by activating the appropriate TSs of the patterns by the stations opposite the trains in question, with substitutions of the successive stations in the said TSs when the trains progress, and also **characterized by** a chaining of the micromobility from cluster to cluster, exploiting the overlap of the clusters, and listening by the current CPU of the one or more adjacent interstation(s), so that the said micromobility can operate alone, support the mobility of the network layer, mobile IP, or cooperate with it.

7. Communication system according to Claims 1, 2, 4 to 6, **characterized by** a fixed, VF, or dynamic, VD, pattern-allocation function from cluster to cluster, and within the clusters, which carries out a pattern reuse geographically ordered by each CPU, so that the distance of reuse is of the order of the length of the right of way, with a resolution defined by a spatial division of the right of way into a central zone and two lateral margins, on the near side of the borders, the said margins having a length greater than or equal to those of the cluster overlaps of Claim 1.

8. Communication system according to Claims 1, 2, 4 to 7, **characterized by** a dynamic allocation or reallocation initiated by a sequence of doublets, transmitted by the stations in slots TS that are reserved for them individually in the TDMA cycle, each doublet containing the current pattern number and the new pattern number to which the train must switch, with maintenance of the doublet from cycle to cycle until its execution by the equipment of the train.

9. Communication system according to Claims 1, 2, 4 to 7, **characterized by** the holding of a synopsis of the situation of the trains by the CPU in its right of way, and the broadcasting of this synopsis in the TSs reserved for the stations of its right of way, or in additional TSs which are attached to them, the said synopsis being propagated to the adjacent CPU, either by means of an extension of the synchro link between clusters, or directly by the radio, or else by means of the trains travelling between the clusters, which copy it on the run.

10. Communication system according to Claims 1, 2, 4 to 9, **characterized by** an exchange of the synopses between CPU using the transit network and slave protocols of the IP suite, or particular protocols of communications between routers, which constitutes an alternative A relative to the use of the distribution network between CPU.

11. Communication system according to Claims 1, 2, 4 to 6, 8 and 9, **characterized by** a cooperative dynamic allocation between CPU, which is based on the exchanged synopses and organizes the geographic reuse, train by train, by arranging at each train a safeguarding spatial window in front of and behind its current interstation, and which initiates a reallocation of one train out of two, as soon as their windows meet, a method which constitutes an alternative B to Claim 7.

12. Communication system according to Claims 1, 2, 4 to 9, **characterized by** an intrinsic capability of direct relaying and communication from train to train, by exploiting on the fly, by trains relaying or initiating communication, the TSs specific to each targeted train pattern, identified as being in the immediate vicinity via the situation synopsis, the said capability being complete in fixed allocation VF, or subjected to the dynamic allocation VD carried out by each CPU on its right of way, considered to be predominant.
